# EUROPEAN PATENT APPLICATION

(11) **EP 4 810 672 A1**
(43) Date of publication of application: **23.09.2026**
(21) Application number: 24891531.6
(22) Date of filing: 17.11.2024
(51) Int. Cl.: C25D 7/00, C21D 1/06, C21D 1/18, C22C 19/03, C22C 38/00, C22C 38/44, C23C 18/32, C25D 5/26, F16C 19/06

(54) **RIGID-FILM-COATED OBJECT, MACHINE COMPONENT, AND BEARING**

(30) Priority: 17.11.2023 JP 2023196316
(71) Applicant: NTN Corporation, Osaka-shi, Osaka 530-0005 (JP)
(72) Inventor: YAGITA, Kazuhiro, Kuwana-shi, Mie 511-0867 (JP); OHKI, Chikara, Kuwana-shi, Mie 511-0867 (JP)
(74) Representative: Henkel & Partner mbB
(86) International application number: PCT/JP2024/040745
(87) International publication number: WO 2025/105496

(57) **Abstract**

Provided are a hard film formed body in which hydrogen brittleness resistance and abrasion resistance are improved and sufficient strength is ensured, a machine component using the hard film formed body, and a bearing. A hard film formed body 1 includes a hard film 3 on a surface of a base material 2, the hard film 3 suppressing intrusion and diffusion of hydrogen atoms, wherein the base material 2 is made of martensitic stainless steel or martensitic precipitation hardening stainless steel, the surface of the base material 2 has a Vickers hardness of 500 Hv to 1000 Hv, the hard film 3 has a Vickers hardness of 0.9 times or more a Vickers hardness of the base material 2 and 3000 Hv or less, and the hard film 3 is a Ni coating film.

## Description

### TECHNICAL FIELD

The present invention relates to a hard film formed body having a hard film on a surface of an iron-based alloy base material, a machine component using the hard film formed body, and a bearing.

### BACKGROUND ART

In recent years, reduction in weight and increase in strength have been required for machine components used for automobiles, industrial machines, and the like. Such machine components are often used in hydrogen intrusion environments. For example, when a rolling component such as a rolling bearing or a gear is used under a condition in which water is mixed into a lubricant or under a condition accompanied by slippage, the water or the lubricant is decomposed to generate hydrogen. This hydrogen intrudes in the steel material, which may lead to early damage due to hydrogen brittleness.

Conventionally, the following techniques have been proposed as measures against hydrogen brittleness. For example, Patent Document 1 describes a steel material having an FeS layer having a crystal structure and a thickness of 1 µm or more on a surface of the material. According to Patent Document 1, the FeS layer having a crystal structure has a function of inhibiting intrusion of hydrogen from the outside and discharging hydrogen once intruded into steel to the outside.

Patent Documents 2 and 3 describe stainless steel having hydrogen brittleness resistance on which a passivated film is coated on a surface of stainless steel subjected to an electrolytic polishing treatment.

Patent Document 4 describes a hydrogen engine in which a covering layer made of stainless steel is provided on a member in contact with hydrogen gas in each constituent member of an engine such as a cylinder or a piston.

### PRIOR ART DOCUMENTS

### PATENT DOCUMENT

Patent Document 1: JP 2023-109165 A
Patent Document 2: JP 6853536 B
Patent Document 3: JP 6869495 B
Patent Document 4: JP S51-137004 U1

### SUMMARY OF THE INVENTION

### PROBLEMS TO BE SOLVED BY THE INVENTION

Meanwhile, in recent years, hydrogen has attracted attention as an energy source replacing fossil fuels. Hydrogen, which produces only water when used as an energy source and does not release carbon dioxide (CO₂), is expected as clean energy. In the future, it is expected that hydrogen utilization will progress in the whole society, and it is considered that hydrogen utilization equipment (for example, a ball valve or a compressor for a hydrogen station) will spread accordingly. A machine component such as a bearing used in such hydrogen utilization equipment may be used in an environment exposed to hydrogen. In such a case, the presence of hydrogen supplied from the outside may promote early peeling due to the above-described hydrogen brittleness, and it is considered that measures against hydrogen brittleness are more important.

An FeS layer is proposed in Patent Document 1 described above. However, when the FeS layer reacts with hydrogen gas and generates H₂S, and H₂S is mixed, it may become a catalyst poison and cause a problem in hydrogen utilization.

In addition, the passive film is generally very thin (about several nm) and may be physically broken depending on the application, and the passive film of stainless steel as in Patent Documents 2 and 3 may be generally broken in the presence of halogen-based ions, which may result in pitting corrosion or crevice corrosion.

As a measure against hydrogen brittleness, austenitic stainless steel having excellent corrosion resistance may be used. However, in applications where high yield strength is required, sufficient strength is not ensured in some cases.

The present invention has been made in view of such circumstances, and it is an object of the present invention to provide a hard film formed body in which hydrogen brittleness resistance and abrasion resistance are improved and sufficient strength is ensured, a machine component using the hard film formed body, and a bearing.

### MEANS FOR SOLVING THE PROBLEM

A hard film formed body of the present invention is a hard film formed body including a hard film on a surface of a base material, the hard film suppressing intrusion and diffusion of hydrogen atoms, wherein the base material is made of martensitic stainless steel or martensitic precipitation hardening stainless steel, the surface of the base material has a Vickers hardness of 500 Hv to 1000 Hv, and the hard film has a Vickers hardness of 0.9 times or more a Vickers hardness of the base material and 3000 Hv or less.

The base material is martensitic stainless steel, containing N (nitrogen), and containing 0.05 mass% or more and less than 0.60 mass% of C (carbon). Further, the base material contains 0.20 mass% to 0.50 mass% of carbon, 0.10 mass% to 0.50 mass% of manganese, 0.30 mass% or less of nickel, 14.00 mass% to 17.00 mass% of chromium, 1.00 mass% to 2.50 mass% of molybdenum, and 0.10 mass% to 0.40 mass% of nitrogen. In the present specification, "to" means a range including numerical values before and after "to".

The hard film that suppresses intrusion and diffusion of hydrogen atoms is a Ni coating film. The Ni coating film includes a Ni-P-B coating film containing 90 mass% or more of Ni.

A diamond-like carbon (DLC) layer is formed on a surface of the hard film, and an intermediate layer is formed on a base material side of the DLC layer.

In an electrochemical hydrogen permeation method using a test piece (thickness of the base material: 1 mm) formed of the hard film formed body, when electrolysis is performed in which an area where the test piece is in contact with an electrolyte solution in each of a cathode tank and an anode tank is set to 3.14 cm², and a current density on an anode tank side is 1 mA/cm², an extension time of a Breakthrough time of the test piece is 0.4 times or more a Breakthrough time of an object piece formed of the base material having a thickness of 1 mm.

A machine component of the present invention is a machine component using the hard film formed body of the present invention. The machine component serves as a bearing member.

A bearing of the present invention is a bearing using the bearing member.

### EFFECT OF THE INVENTION

The hard film formed body of the present invention includes a hard film that suppresses intrusion and diffusion of hydrogen atoms on a surface of the base material. The base material is made of martensitic stainless steel or martensitic precipitation hardening stainless steel. By using these stainless steels for the base material, the base material portion can have corrosion resistance as well as strength, and further, the low hydrogen diffusion coefficients of these stainless steels can be combined. The Vickers hardness of the hard film for suppressing intrusion and diffusion of hydrogen atoms is 0.9 times or more the Vickers hardness of the base material and is 3000 Hv or less. Thus, the hard film formed body is obtained in which the peeling resistance of the hard film is improved, the hydrogen brittleness resistance and the abrasion resistance are improved, and sufficient strength is ensured.

The base material is martensitic stainless steel, containing nitrogen, and containing carbon in an amount of 0.10 mass% or more and less than 0.60 mass%. Thus, for example, as compared with nitrogen-free martensitic stainless steel or the like, the base material can reduce the amount of carbon to obtain the same hardness, and as a result, the base material can suppress generation of coarse carbides and reduce the decrease in strength of machine components or the like due to stress concentration.

The hard film is a Ni coating film, and in particular, the Ni coating film includes a Ni-P-B coating film containing 90 mass% or more of Ni, which results in more improved abrasion resistance.

The intermediate layer and the DLC layer are formed on the surface of the hard film. Thus, further improved abrasion resistance is obtained, and hydrogen brittleness resistance can also be improved by these layers. In addition, by interposing the intermediate layer, adhesion between the hard film and the DLC layer is improved, and a hard film formed body having improved peeling resistance as a whole is obtained.

### BRIEF DESCRIPTION OF THE DRAWINGS

FIG. 1 is a schematic sectional view illustrating a first embodiment of a hard film formed body of the present invention.
FIG. 2 is a schematic sectional view illustrating a second embodiment of the hard film formed body of the present invention.
FIG. 3 is a sectional view illustrating an example of a bearing of the present invention.
FIG. 4 is a sectional view illustrating a hydrogen circulation pump using the bearing of the present invention.
FIG. 5 is a sectional structure photograph of a hard film formed body of Example 2.
FIG. 6 is a schematic diagram of an electrochemical hydrogen permeation test.
FIG. 7 is a diagram illustrating an overview of an electrochemical hydrogen permeation test and the like.
FIG. 8 is a graph illustrating the behavior of an ionization current in Examples and Comparative Examples.

### MODE FOR CARRYING OUT THE INVENTION

To solve the above-described problems, the inventors of the present invention have studied a steel material of a base material and a hard film, and found that when martensitic stainless steel or martensitic precipitation hardening stainless steel is used as a base material, strength can be improved as compared with austenitic stainless steel, and sufficient measures against hydrogen brittleness can be taken by a combination of corrosion resistance of the base material itself and the hard film. The present invention is based on such findings.

Hereinafter, a hard film formed body of the present invention will be described with reference to the drawings. The hard film formed body of the present invention is used for, for example, a machine component requiring high strength, and is particularly used for a bearing or the like used in hydrogen intrusion environments. The hydrogen intrusion environments refer to environments in which various forms of hydrogen, such as hydrogen gas and moisture in the use environment and hydrogen atoms in a lubricating oil, can intrude and diffuse into the base material.

### (First Embodiment)

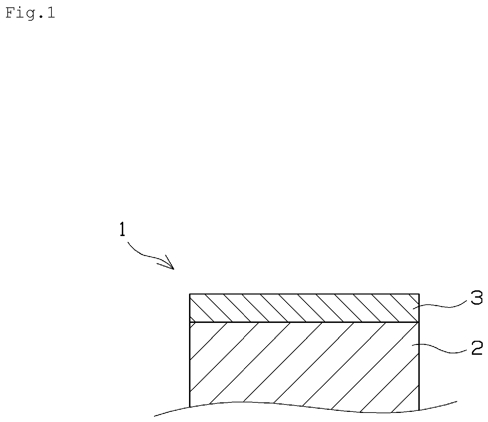

FIG. 1 is a schematic sectional view of a first embodiment of a hard film formed body of the present invention. As illustrated in FIG. 1, a hard film formed body 1 includes a base material 2 and a hard film 3 formed on a surface of the base material 2. The hard film 3 is stable in a hydrogen environment, has a property of suppressing intrusion or diffusion of hydrogen, and delays intrusion and diffusion of hydrogen into the base material 2, for example. As a result, occurrence of hydrogen brittleness in the base material 2 can be delayed. The hard film 3 is made of a material different from the material of the base material 2.

In the present invention, martensitic stainless steel or martensitic precipitation hardening stainless steel is used for the base material 2. For example, a machine component used in an environment containing hydrogen or an environment containing moisture, such as a fuel cell peripheral component, preferably ensures corrosion resistance of a base portion in preparation for a case where the hard film cannot cover the entire component or a failure occurs in the hard film depending on the component shape, and stainless steel is used in the present invention. Further, martensitic stainless steel or martensitic precipitation hardening stainless steel is used from the viewpoint of use in a portion requiring strength, then a predetermined hard film is formed. As one aspect of measures against hydrogen brittleness, it is also conceivable to use martensitic stainless steel (for example, SUS440C or the like) or martensitic precipitation hardening stainless steel for the base material without covering.

Martensitic stainless steel is stainless steel having a metallic structure called martensite, and is distinguished from austenitic stainless steel, ferritic stainless steel, and austenitic ferritic (two-phase) stainless steel. Although martensitic stainless steel is inferior in corrosion resistance to, for example, austenitic stainless steel, martensitic stainless steel is very hard and has high strength. Thus, martensitic stainless steel has excellent abrasion resistance. In addition, the hardness can be adjusted through heat treatment, the hardness difference from the hard film can be easily adjusted, and the peeling resistance of the hard film can be improved.

Examples of the martensitic stainless steel include SUS403, SUS420, and SUS440C. For example, the chemical components (mass%) of SUS403 are carbon: 0.15 or less, silicon: 0.50 or less, manganese: 1.00 or less, phosphorus: 0.040 or less, sulfur: 0.030 or less, chromium: 11.50 to 13.00, and nickel: 0.60 or less. The chemical components (mass%) of SUS440C are carbon: 0.95 to 1.20, silicon: 1.00 or less, manganese: 1.00 or less, phosphorus: 0.040 or less, sulfur: 0.030 or less, chromium: 16.00 to 18.00, and nickel: 0.60 or less.

The martensitic stainless steel is preferably a nitrogen-containing martensitic stainless steel containing N (nitrogen). By containing nitrogen, the amount of carbon can be reduced as well as maintaining hardness, and generation of coarse carbides is likely to be suppressed. As a result, it becomes easy to suppress a decrease in strength of the machine component or the like due to stress concentration. In the martensitic stainless steel, C (carbon), Mn (manganese), and Mo (molybdenum) are preferably added to increase the nitrogen solubility in the molten steel under atmospheric pressure.

Martensitic precipitation hardening stainless steel is stainless steel in which the martensization start temperature is room temperature or higher and a martensitic structure is developed after a solution treatment. Examples of the stainless steel include SUS630.

Hereinafter, each chemical component of the martensitic stainless steel used in the present invention will be described.

From the viewpoint of securing hardness, the content of C (carbon) is, for example, 0.05 mass% or more, preferably 0.10 mass% or more, more preferably 0.20 mass% or more, and it may be 0.30 mass% or more. When the carbon amount increases, coarse carbides are likely to be generated in the structure. Thus, the content of carbon is preferably less than 0.60 mass%, more preferably 0.50 mass% or less, and it may be 0.45 mass% or less. In general, to obtain the highest hardness at the time of quenching steel, the carbon amount is 0.6 mass% or more, but it is preferable that the carbon amount is smaller than that from the viewpoint of carbides.

When the amount of Si (silicon) is excessively large, toughness may be impaired, and the stainless steel may become brittle. Thus, the content of Si is, for example, 0.50 mass% or less. The content of silicon is preferably 0.10 mass% to 0.50 mass%, and it may be 0.20 mass% to 0.40 mass%.

Mn (manganese) improves hardenability, but on the other hand, when the amount of Mn is too large, austenite is stabilized, residual austenite after heat treatment increases, and there is a possibility that hardness is hardly obtained. The content of manganese is, for example, 1.00 mass% or less, preferably 0.10 mass% to 0.50 mass%, and it may be 0.20 mass% to 0.40 mass%.

Ni (nickel) improves hardenability, toughness, and corrosion resistance, but is costly. The content of nickel is, for example, 0.60 mass% or less, preferably 0.30 mass% or less, and it may be 0.10 mass% to 0.20 mass%.

The content of Cr (chromium) is, for example, 14.00 mass% to 17.00 mass%. When the content is within this range, reduction in toughness and the like due to coarse carbides is likely to be suppressed as well as sufficiently exhibiting corrosion resistance. The content of chromium is preferably 15.00 mass% to 16.50 mass%, and it may be 15.00 mass% to 16.00 mass%.

The content of Mo (molybdenum) is, for example, 1.00 mass% to 2.50 mass%, preferably 1.00 mass% to 2.00 mass%, and it may be 1.50 mass% to 2.00 mass%, or 1.50 mass% to 1.80 mass%. By containing a predetermined amount of Mo, corrosion resistance can be improved.

The content of N (nitrogen) is preferably 0.05 mass% or more, more preferably 0.10 mass% or more, and it may be 0.15 mass% or more. When the content of nitrogen is too large, blowholes may be generated. Thus, the content of nitrogen is preferably 0.50 mass% or less, more preferably 0.40 mass% or less, and it may be 0.30 mass% or less.

The martensitic stainless steel used in the present invention may further contain P (phosphorus), Cu (copper), Co (cobalt), and V (vanadium). The content of phosphorus is, for example, 0.04 mass% or less, and it may be 0.01 mass% to 0.03 mass%. The content of copper is, for example, 0.04 mass% or less, and it may be 0.01 mass% to 0.03 mass%. The content of cobalt is, for example, 0.04 mass% or less, and it may be 0.01 mass% to 0.03 mass%. The content of vanadium is, for example, 1.00 mass% or less, and it may be 0.10 mass% to 0.50 mass%.

The Vickers hardness of the base material 2 (Vickers hardness of the surface on which the hard film 3 is formed) is preferably 500 Hv to 1000 Hv, more preferably 600 Hv to 900 Hv, still more preferably 650 Hv to 750 Hv. When the Vickers hardness is within these ranges, the hardness ratio between the base material and the hard film is likely to be set to a predetermined range as well as securing the abrasion resistance of the hard film formed body.

Before the hard film 3 is formed, the base material 2 may be cured through heat treatment including quenching. A nitrided layer may be formed through nitriding treatment. As the nitriding treatment, for example, plasma nitriding treatment in which an oxide layer that hinders adhesion is unlikely to be generated on the surface of the base material can be performed. In addition, to improve the adhesion of the hard film 3 to the base material 2, the base material 2 may be pretreated. Examples of the pretreatment include a degreasing treatment using a solvent or an alkali solution, and an acid immersion treatment.

The surface roughness Ra of the base material 2 is, for example, 0.1 µm or less, preferably 0.05 µm or less. To adjust the surface roughness Ra of the base material 2, various processing treatments (such as surface finishing) may be performed.

Hydrogen brittleness affects more a steel material having a higher strength, and particularly in a form called delayed fracture, hydrogen brittleness is remarkable in a high-strength steel having a yield stress of 1 GPa or more. However, in the hard film formed body of the present invention, the following hard film, DLC layer, and the like are formed on the surface of the steel material, and thus, delayed fracture due to hydrogen brittleness can be suitably suppressed.

The hard film 3 is a coating film that suppresses intrusion and diffusion of hydrogen atoms. The Vickers hardness of the hard film 3 is 0.90 times or more the Vickers hardness of the base material 2, and is 3000 Hv or less. As a result, improved adhesion of the hard film 3 to the base material 2 is obtained, and hydrogen brittleness resistance and abrasion resistance of the hard film 3 can be stably exhibited. The magnification is preferably 0.90 times to 1.50 times, and it may be 0.95 times to 1.30 times, or 1.05 times to 1.20 times, from the viewpoint of adhesion.

Examples of the hard film 3 include a Ni coating film containing Ni as a main component, a Cu coating film containing Cu as a main component, a Zn coating film containing Zn as a main component, a WC coating film, a DLC coating film, and a combination thereof. Among these coating films, the hard film 3 is preferably a Ni coating film or a WC coating film because hydrogen such as hydrogen gas and moisture in the use environment and hydrogen atoms in the lubricating oil can be further delayed from intruding and diffusing into the base material 2.

For example, as the Ni coating film, a Ni-P coating film, a Ni-B coating film, a Ni-P-B coating film, a Ni-P-B-SiC dispersion coating film, a combination thereof, or the like can be used. These Ni coating films are formed by a PVD method (physical vapor deposition method) such as an ion plating method or a sputtering method, a plating method such as an electrolytic plating method or an electroless plating method, or the like. For example, in the case of an electroless plating method, an electroless plated coating film can be formed using a plating bath containing various reducing agents in a nickel salt. In particular, the hard film 3 is preferably a Ni plated coating film, and the Ni plated coating film preferably includes a Ni-P-B coating film.

The Ni-P-B coating film is a composite coating film of Ni, P, and B, and is formed by an electroless plating method. In the Ni-P-B coating film, the content of Ni is, for example, 90 mass% or more, preferably 95 mass% or more, more preferably 97 mass% or more. As the compositions of the Ni-P-B coating film, particularly preferably, Ni is 97 mass% or more, P is 1 mass% to 3 mass%, and B is 1 mass% or less. These compositions can be appropriately adjusted according to the properties required for the coating film. The Ni-P-B coating film is harder than, for example, the Ni-P coating film and is also excellent in abrasion resistance. Examples of commercially available products of the Ni-P-B coating film include KANIBORON (trade name) manufactured by JAPAN KANIGEN CO., LTD.

In the relationship between the heat treatment temperature and the hardness after the plating treatment, the hardness of the Ni-P-B coating film is improved as the temperature of the heat treatment (baking) is increased in the range of up to 400°C. This is because the crystallization of Ni proceeds with the heat treatment. The structure of the Ni-P-B coating film is microcrystalline (polycrystalline), and a peak derived from Ni can be observed in an X-ray diffraction pattern. The Ni-P-B coating film has a hardness higher than the hardness of the Ni-P coating film, exhibits a Vickers hardness Hv of 700 or more at the time of precipitation, and exhibits a Vickers hardness Hv of 800 or more at 200°C at the time of heat treatment.

For example, in the case of a Ni coating film, the Vickers hardness is preferably 500 Hv to 1000 Hv, more preferably 600 Hv to 900 Hv, still more preferably 700 Hv to 800 Hv.

For example, when the hard film 3 includes a Ni-P-B coating film, the hardness of the coating film improves as the heat treatment temperature increases, but on the other hand, the hardness of the base material 2 obtained by quenching or the like is reduced, and the strength of the entire hard film formed body may decrease. Thus, by using a steel material cured by heat treatment and subjecting the Ni-P-B coating film provided on the surface to an aging treatment at an appropriate temperature, both a strong steel material and a strong hard film can be obtained, and a hard film formed body having strength as a whole can be obtained. Further, even in a situation where distortion occurs in the steel material, it is possible to suppress yielding, plastic deformation, and peeling of only the hard film. The aging treatment may be unnecessary depending on the hardness of the steel material.

For example, by setting the temperature of baking for the Ni-P-B coating film to 200°C or lower, preferably 180°C or lower, the influence of tempering of the base material 2 can be reduced. In this manner, in the production of the hard film 3, it is preferable to appropriately select the tempering temperature and the necessary strength of the base material 2, and the hardness required for the hard film 3 on the surface of the base material 2 so that no defect due to the difference between the hardness of the base material 2 and the hardness of the hard film 3 occurs.

For example, in the case of a Ni coating film, the lower limit of the thickness is preferably 1 µm in consideration of ease of management in production and the possibility of a decrease in thickness due to abrasion. On the other hand, the upper limit is preferably 50 µm to suppress production cost, processing time, and a deviation of stress in the film. The thickness of the hard film 3 is more preferably 3 µm to 30 µm, still more preferably 3 µm to 10 µm. This thickness can be set according to the necessary hydrogen brittleness resistance effect and the like. In the case of a plated coating film, for example, the thickness can be adjusted by adjusting the immersion time in the plating bath.

As the hard film 3, for example, the WC film is formed by using an unbalanced magnetron sputtering (UBMS) method using a WC target. The thickness of the WC film is preferably 0.2 µm or more and less than 1 µm, and it may be 0.2 µm or more and 0.6 µm or less. The Vickers hardness of the WC film is, for example, 1000 Hv to 2000 Hv, and it may be higher than 2000 Hv.

As the hard film 3, for example, the DLC coating film is formed by using an UBMS method using a graphite target and a hydrocarbon-based gas as a carbon supply source. The Vickers hardness of the DLC coating film is, for example, 3000 Hv or less, and it may be preferably 1000 Hv or more and 2500 Hv or less.

The hydrogen diffusion coefficient in the hard film 3 is preferably 5.00 × 10⁻¹² m²/s or less, may be 1.00 × 10⁻¹² m²/s or less, or may be 8.00 × 10⁻¹³ m²/s or less. A specific range is, for example, 1.00 × 10⁻¹³ m²/s to 8.00 × 10⁻¹³ m²/s. The hydrogen diffusion coefficient is determined by an electrochemical hydrogen permeation method. Details are shown in Examples.

As an example of the method for forming the hard film 3, formation of a Ni-P-B coating film will be described. As the plating bath to be used, a nickel salt containing a phosphorus compound and a boron compound as reducing agents is used. More specifically, nickel chloride, nickel sulfate, or like is used as the nickel salt, sodium hypophosphite, potassium hypophosphite, or the like is used as the phosphorus compound, and dimethylaminoboron, sodium borohydride, or the like is used as the boron compound. The ratio between the nickel salt, the phosphorus compound, and the boron compound in the plating bath can be appropriately adjusted according to the compositions of the resulting plated coating film. An organic acid such as acetic acid or a chelating agent such as ethylenediaminetetraacetic acid (EDTA) can also be added to the plating bath.

The pH of the plating bath is preferably in the range of 6 to 7 from the viewpoint of stability, deposition rate, and the like. The temperature of the plating bath is, for example, 60°C to 90°C, preferably 70°C to 90°C.

The obtained plated coating film can be heated (baked) to increase film hardness. The heat treatment temperature is, for example, 100°C to 200°C, preferably 100°C to 180°C, more preferably 120°C to 160°C. The heat treatment time is, for example, 30 minutes to 120 minutes. This heat treatment is performed under an atmosphere of air, an inert gas, a reducing gas, or the like.

As a physical property of the hard film formed body 1, in an electrochemical hydrogen permeation method using a test piece (thickness of the base material 2: 1 mm) formed of the hard film formed body, when electrolysis is performed on an area of 3.14 cm² where the test piece is in contact with the electrolyte solution in each of the cathode tank and the anode tank, wherein a current density on the anode tank side is 1 mA/cm², an extension time of a Breakthrough time of the test piece is preferably 0.4 times or more, more preferably 1.0 times or more, still more preferably 2.0 times or more, 5.0 times or more, or 10.0 times or more a Breakthrough time of an object piece formed of the base material 2 having a thickness of 1 mm. Details of the electrochemical hydrogen permeation method will be described in Examples.

### (Second Embodiment)

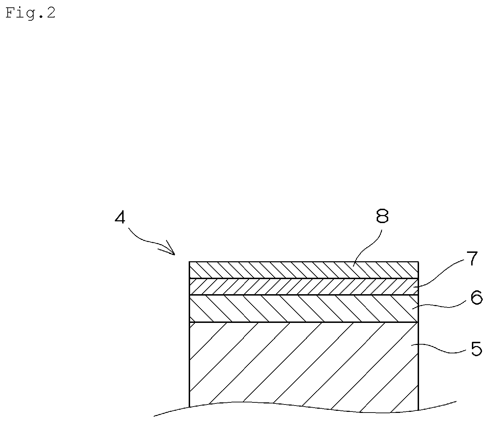

FIG. 2 is a schematic sectional view of a second embodiment of the hard film formed body of the present invention. As illustrated in FIG. 2, a hard film formed body 4 includes a base material 5, a hard film 6 formed on a surface of the base material 5, an intermediate layer 7 formed on the hard film 6, and a DLC layer 8 formed on the intermediate layer 7. In this case, the coating film formed on the base material 5 has a substantially three-layer structure. The configurations of the base material 5 and the hard film 6 are the same as those of the base material 2 and the hard film 3 described in the first embodiment. Thus, the description thereof is omitted.

The intermediate layer 7 is a layer interposed between the hard film 6 and the DLC layer 8. As the intermediate layer 7, a tungsten carbide (WC) layer, a mixed layer mainly composed of WC and DLC, or the like can be used. WC has an intermediate hardness and elastic modulus between the hard film 6 and the DLC layer 8, in which concentration of residual stress after film formation hardly occurs.

As the intermediate layer 7, a mixed layer mainly composed of WC and DLC is preferable, and a layer in which the content rate of WC in the intermediate layer becomes smaller and the content rate of DLC in the intermediate layer becomes higher continuously or stepwise from the hard film 6 side toward the DLC layer 8 side is more preferable. This results in improved adhesion between both surfaces of the hard film 6 and the DLC layer 8. In addition, in the intermediate layer, WC and DLC are physically bound to each other, and damage and the like in the intermediate layer can be prevented. Further, the content rate of DLC is increased on the DLC layer 8 side, which results in improved adhesion between the DLC layer 8 and the intermediate layer 7. In this case, the intermediate layer 7 is a layer that bonds highly non-adhesive DLC to the hard film 6 side with WC because of an anchor effect.

The DLC layer 8 is a film mainly composed of DLC. DLC has an intermediate structure between a graphite structure (sp²) and a diamond structure (sp³) mixed together. As a method for forming the DLC layer 8, a physical vapor deposition method such as a sputtering method or an ion plating method, a chemical vapor deposition method, an UBMS method, or the like can be used.

The DLC layer 8 preferably has a relaxation layer portion (not illustrated) on the side adjacent to the intermediate layer 7. This is a portion obtained by continuously or stepwise changing, for example, at least one of the film formation condition parameters (amount of hydrocarbon-based gas to be introduced, degree of vacuum, bias voltage) of the UBMS method when these parameters are different between the intermediate layer 7 and the DLC layer 8 to avoid a rapid change in these parameters. More specifically, with the film formation condition parameter at the time of forming the outermost layer of the intermediate layer 7 as a start point and the final film formation condition parameter of the DLC layer 8 as an end point, each parameter is changed continuously or stepwise within this range. This eliminates rapid difference in physical properties (hardness, elastic modulus, and the like) between the intermediate layer 7 and the DLC layer 8, which results in further improved adhesion between the intermediate layer 7 and the DLC layer 8. For example, by continuously or stepwise increasing the bias voltage, the composition ratio between the graphite structure (sp²) and the diamond structure (sp³) in the DLC structure is biased to the latter, and the hardness inclines (increases).

In the hard film formed body 4 of the second embodiment, the Vickers hardness of the DLC layer 8 serving as a surface layer is, for example, 1000 Hv or more and 3000 Hv or less.

The total film thickness of the intermediate layer 7 and the DLC layer 8 is preferably 1.0 µm to 5.0 µm, more preferably 1.0 µm to 3.0 µm. When the total film thickness is within these ranges, peeling of the intermediate layer 7 and the DLC layer 8 can be suppressed as well as improving abrasion resistance and mechanical strength. The total film thickness of the intermediate layer 7 and the DLC layer 8 is preferably smaller than the film thickness of the hard film 6. In the hard film formed body 4, the total thickness of the coating film formed on the base material 5 is preferably 3.0 µm to 30 µm, more preferably 3.0 µm to 10 µm.

As an example of the method for forming the intermediate layer 7 and the DLC layer 8, an example using an UBMS apparatus using Ar gas as a sputtering gas will be described.

For example, in a case where the intermediate layer 7 is a mixed layer mainly composed of WC and DLC, film formation is performed while increasing the sputtering power to be applied to the graphite target serving as the carbon supply source and decreasing the power to be applied to the WC target continuously or stepwise, and thus, a layer having a gradient composition in which the content rate of WC becomes small and the content rate of DLC becomes large toward the DLC layer 8 side can be obtained. The degree of vacuum in the UBMS apparatus (in the film forming chamber) at the time of forming the intermediate layer 7 is, for example, 0.2 to 1.2 Pa. The bias voltage to be applied to the base material is, for example, 20 to 100 V.

The DLC layer 8 can be formed by using a graphite target and a hydrocarbon-based gas (methane gas, acetylene gas, benzene, or the like) in combination as a carbon supply source, setting the proportion of the introduction amount of the hydrocarbon-based gas to the introduction amount 100 of the Ar gas into the apparatus to, for example, 1 to 15, and depositing carbon atoms generated from the carbon supply source on the intermediate layer 7. The degree of vacuum in the apparatus is, for example, 0.2 to 0.9 Pa.

In the form of FIG. 2, the intermediate layer 7 is interposed between the hard film 6 and the DLC layer 8, but the intermediate layer 7 may be omitted. The hard film formed body of the present invention is not limited to the forms of FIG. 1 and FIG. 2. For example, the intermediate layer 7 and the DLC layer 8 may be repeatedly stacked on the hard film 6. The hard film formed body may have a configuration including a base material, a WC film formed on a surface of the base material, and a DLC layer formed on the WC film, for example.

The combination of the base material and the multilayer structure including the hard film can be variously selected depending on the use conditions and the hydrogen exposure environment. For example, the outermost layer portion may have the lowest hydrogen diffusion coefficient, and the second layer portion inside the outermost layer portion may have a higher hydrogen diffusion coefficient than the outermost layer portion. In this case, while the intrusion of hydrogen is prevented as much as possible in the outermost layer portion, diffusion of slightly intruded hydrogen is also prevented in the second layer portion (specifically, the intermediate layer, the hard film, or the like), but the hydrogen diffusion coefficient is higher, and thus, it is possible to prevent hydrogen from accumulating between the outermost layer portion and the second layer portion and blister from occurring. In addition, to prevent the hydrogen that has reached the base material from being concentrated in the base material, the hydrogen diffusion coefficient of the base material may be set to be the highest within the multilayer structure including the base material and the hard film so that the hydrogen diffuses quickly.

### (Application of Hard Film Formed Body)

The application of the hard film formed body of the present invention is not particularly limited, but it is preferable to use the hard film formed body for a machine component because the hard film formed body is excellent in mechanical properties and the like. Examples of the machine component include machine components used in rolling parts and sliding parts of an apparatus, and specific examples thereof include sliding members, bearing members, rolling roll members, compressor vanes, engine components such as gas turbine blades, cutting tools (chips), and gears. Examples of the bearing member include bearing rings such as inner and outer rings, rolling elements for bearing, and retainers. The bearing of the present invention is a bearing using the hard film formed body of the present invention as a bearing member. Examples of the bearing include a rolling bearing, a slide bearing (spherical bush or the like), a linear motion guide bearing, a ball screw, and a linear motion bearing.

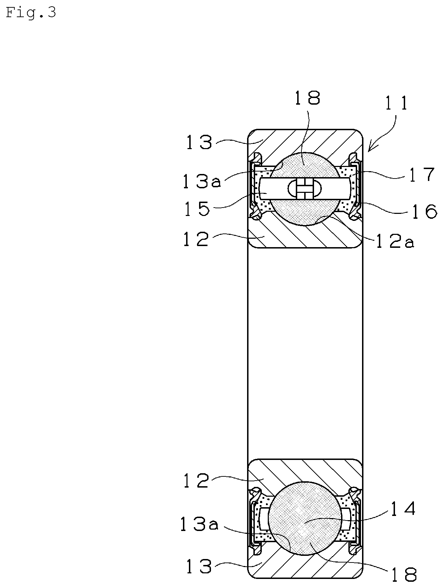

An example of the bearing of the present invention will be described with reference to FIG. 3. FIG. 3 is a sectional view of a deep groove ball bearing using the hard film formed body of the first embodiment as a rolling element. A deep groove ball bearing 11 includes an inner ring 12 having an inner ring raceway surface 12a on an outer periphery, an outer ring 13 having an outer ring raceway surface 13a on an inner periphery, and a plurality of balls (rolling elements) 14 rolling between the inner ring raceway surface 12a and the outer ring raceway surface 13a. The balls 14 are held at regular intervals by a retainer 15. Both axial end openings of the inner and outer rings are sealed by a seal member 16, and a grease 17 is sealed in the bearing space.

In the rolling bearing in FIG. 3, a hard film 18 is formed on the entire spherical surface of the ball 14. In FIG. 3, the hard film 18 is formed only on the ball 14, but it may be formed on the surface (including a part) of other bearing members such as the inner ring 12 and the outer ring 13 according to the bearing type, the application, and the like. In the configuration in which two or more members contact or slide, the hard film formed body is preferably used for the one or more members.

In the bearing of the present invention, at least a part of the bearing member is formed of the hard film formed body of the present invention. Thus, it is possible to suitably suppress early peeling caused by hydrogen brittleness in use in hydrogen intrusion environments. Thus, the bearing of the present invention is suitable for a bearing used in an environment where early peeling due to hydrogen brittleness is likely to occur.

For example, the bearing is used as a bearing for a transaxle of a vehicle (fuel cell vehicle (FCV), electric vehicle (EV), or the like), a vehicle transmission (continuously variable transmission or the like), or a vehicle motor (for driving unit or transmission). Bearings for these applications are required to have performance that can withstand a rapid change in rotational speed due to shifting, high rotation, high load, and the like. In these types of equipment, a lubricating oil having low viscosity is used to reduce power loss. In such a severe use environment, abrasion of the bearing ring and the rolling elements is likely to be promoted because of sliding. When a new steel surface is formed because of the abrasion, water and a lubricant component are decomposed to generate hydrogen, and the hydrogen intrudes into the steel. Thus, early peeling due to hydrogen brittleness is likely to occur. In a fuel cell vehicle or the like, leakage hydrogen from a hydrogen facility may promote hydrogen brittleness of a rolling bearing.

In addition, the bearing of the present invention is used as a bearing for hydrogen utilization equipment. In particular, it is useful as a bearing used in an environment exposed to hydrogen supplied from the outside. In the future, with the progress of hydrogen utilization, it is considered that the number of cases in which bearings are used in a hydrogen atmosphere (including a mixed atmosphere in which hydrogen is mixed) will increase. In such a case, it is considered that hydrogen supplied from the outside (hydrogen due to an external factor) affects early peeling due to hydrogen brittleness in addition to hydrogen generated with decomposition of the grease (hydrogen due to an internal factor). In the bearing of the present invention, even when early peeling caused by hydrogen brittleness is more concerned than before, it is possible to effectively suppress the early peeling by using the hard film formed body.

Examples of the hydrogen utilization equipment include a ball valve and a compressor for a hydrogen station. The type of the compressor is not particularly limited, and it may be any of a reciprocating type, a rotary type (screw), a centrifugal type, and an axial type. The hydrogen utilization equipment also includes a highpressure hydrogen pressure reducing valve and a hydrogen circulation pump for the fuel cell vehicle described above.

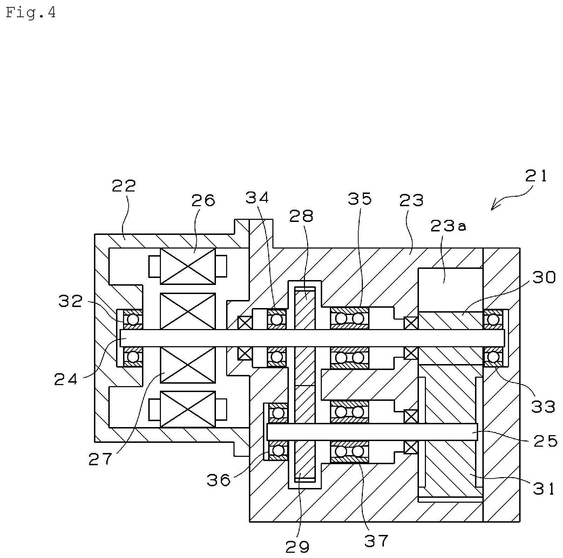

Here, as a configuration in which the bearing of the present invention is applied to a hydrogen circulation pump, FIG. 4 illustrates a sectional view of a hydrogen circulation pump. A hydrogen circulation pump 21 includes a motor housing 22, a pump housing 23, rotary shafts 24 and 25, a motor stator 26, a motor rotor 27, gears 28 and 29, rotors 30 and 31, and rolling bearings 32, 33, 34, 35, 36, and 37.

The motor housing 22 is attached to the pump housing 23. One end side of the rotary shaft 24 is disposed in the motor housing 22, and the other end side of the rotary shaft 24 is disposed in the pump housing 23. One end and the other end of the rotary shaft 24 are rotatably supported by the rolling bearing 32 disposed in the motor housing 22 and the rolling bearing 33 disposed in the pump housing 23, respectively. The rotary shaft 24 is rotatably supported between one end and the other end by the rolling bearing 34 and the rolling bearing 35 disposed in the pump housing 23.

The rotary shaft 25 is disposed in the pump housing 23. One end of the rotary shaft 25 is rotatably supported by the rolling bearing 36 disposed in the pump housing 23. The rotary shaft 25 is rotatably supported by the rolling bearing 37 disposed in the pump housing 23 at a position away from one end.

The motor stator 26 is disposed in the motor housing 22. The motor rotor 27 is attached to the rotary shaft 24 so as to face the motor stator 26. The rotary shaft 24 is rotated by the motor stator 26 and the motor rotor 27. The gear 28 and the gear 29 are attached to the rotary shaft 24 and the rotary shaft 25, respectively. Rotation of the rotary shaft 24 is transmitted to the rotary shaft 25 by the gear 28 and the gear 29. The gear 28 is positioned between the rolling bearing 34 and the rolling bearing 35, and the gear 29 is positioned between the rolling bearing 36 and the rolling bearing 37.

A pump chamber 23a is formed in the pump housing 23. The rotor 30 and the rotor 31 are disposed in the pump chamber 23a. The rotor 30 and the rotor 31 are attached to the rotary shaft 24 and the rotary shaft 25, respectively. When the rotor 30 rotates with the rotation of the rotary shaft 24, and the rotor 31 rotates with the rotation of the rotary shaft 25, hydrogen is sucked into the pump chamber 23a and is discharged from the pump chamber 23a.

In FIG. 4, the rolling bearings 32, 33, 34, and 36 are deep groove ball bearings. The rolling bearing 33 is used in an environment exposed to hydrogen supplied from the outside (for example, under a hydrogen atmosphere). The rolling bearings 35 and 37 are double row angular contact ball bearings. In the configuration of FIG. 4, at least one of the rolling bearings 32, 33, 34, 35, 36, and 37 is used as the bearing of the present invention.

The machine component of the present invention includes, for example, the hard film formed body of the present invention in at least a part thereof. For example, even in a case where it is difficult to apply the hard film to the entire surface of the base material due to the hard film formation step, the effect can be exhibited by applying the hard film to a portion exposed to a large amount of hydrogen such as a hydrogen gas environment and disposing a portion having no hard film in the other portion. In this case, even in a portion with no hard film, stainless steel having excellent corrosion resistance can suppress generation and intrusion of trace hydrogen due to a corrosion reaction. In addition, when one or more types of hard films are applied two or more times while a place where the hard film cannot be applied is shifted, the entire base material can be covered with at least one or more layers of hard films.

### EXAMPLES

The present invention will be specifically described with reference to Examples and Comparative Examples, but the present invention is not limited by these examples.

### [Example 1]

A steel sheet (thickness: 1 mm) made of nitrogen-containing martensitic stainless steel and having a Vickers hardness of 693 Hv on the surface was used as a base material. The chemical components of this stainless steel are shown below.

Chemical components; C: 0.41 mass%, Si: 0.27 mass%, Mn: 0.41 mass%, P: 0.02 mass%, Cu: 0.02 mass%, Ni: 0.14 mass%, Cr: 15.57 mass%, Mo: 1.65 mass%, Co: 0.02 mass%, N: 0.19 mass%, balance: Fe and unavoidable impurity elements

The surface of the steel sheet was subjected to a KANIBORON plating treatment as a type of electroless plating method. The compositions of the coating film thus obtained were as follows: Ni: 97 mass% to 98 mass%, P: 1.5 mass% to 2.5 mass%, and B: 0.05 mass% to 0.5 mass%. After the KANIBORON plating treatment, baking was performed at 150°C for 1 hour, and aging curing was performed, whereby an electroless Ni-P-B plated coating film as a hard film was formed. The thickness of the Ni plated coating film was 5 µm (Example 1).

### [Example 2]

The surface of the steel sheet of the nitrogen-containing martensitic stainless steel was subjected to a KANIBORON plating treatment in the same manner as in Example 1, whereby a Ni plated coating film (hard film) having a thickness of 5 µm was formed. Further, a WC/DLC coating film was formed thereon as an intermediate layer, and a DLC coating film was formed on the outermost surface.

The WC/DLC coating film was formed by an UBMS method. Specifically, sputtering power to be applied to the WC target and the graphite target was adjusted while methane gas as a hydrocarbon-based gas was supplied, the composition ratio between WC and DLC was inclined, and a WC/DLC gradient layer in which WC was large on the Ni plating coating film side and DLC was large on the surface side was formed. The DLC coating film was also formed by the UBMS method. In this case, as a carbon supply source, a graphite target and methane gas as a hydrocarbon-based gas were used in combination.

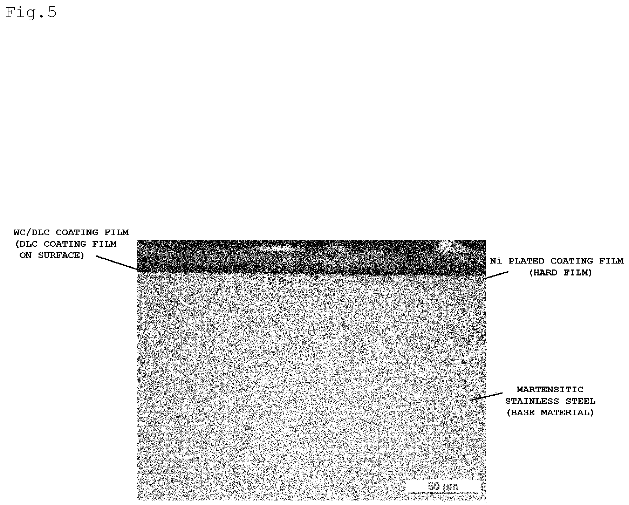

FIG. 5 shows a sectional structure photograph of the hard film formed body of Example 2. In this Ni plated coating film, strictly speaking, an electroless Ni-P plated coating film is formed on the base material, an electroless Ni-P-B plated coating film is formed thereon, and a WC/DLC coating film and a DLC coating film are further formed thereon.

### [Reference Examples 1 to 2]

SUJ2 having a thickness of about 1 mm was quenched and then tempered at 190°C to prepare a steel sheet having a hardness of 61.5 HRC (730 Hv). The surface of this steel sheet was subjected to a KANIBORON plating treatment in the same manner as in Example 1 described above, whereby a 5 µm-thick Ni plated coating film (Reference Example 1) and a 30 µm-thick Ni plated coating film (Reference Example 2) were formed respectively.

### [Comparative Example 1]

In Comparative Example 1, the steel sheet of SUJ2, which was not subjected to the plating treatment of Reference Examples 1 to 2 but quenched and tempered, was used.

### <Hardness Test>

The Vickers hardness of the hard film of Example 1 was measured according to JIS Z 2244. As a result, the hardness of the hard film in Example 1 was 783 Hv (the same applies to Example 2), and was almost the same as (1.13 times) the hardness of the base material.

### <Electrochemical Hydrogen Permeation Test>

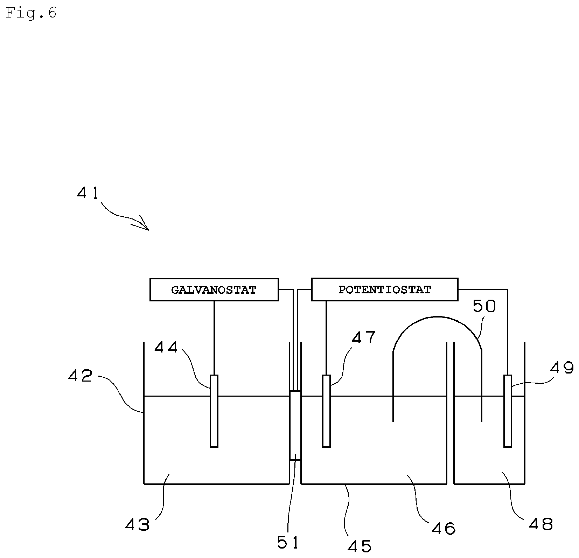

An electrochemical hydrogen permeation test was performed as an evaluation of hydrogen intruding and diffusing into each of the test pieces of Examples 1 to 2, Reference Examples 1 to 2, and Comparative Example 1. FIG. 6 is a schematic diagram of the testing apparatus. As illustrated in FIG. 6, a testing apparatus 41 includes a cathode tank 42, an anode tank 45, a cathode electrode 44 (for example, a Pt electrode), an anode electrode 47 (for example, a Pt electrode), a galvanostat, and a potentiostat. The cathode tank 42 and the anode tank 45 are divided by a test piece 51. In Examples 1 to 2 and Reference Examples 1 to 2, the hard film formed on the test piece 51 is disposed on the cathode tank 42 side.

An electrolyte solution 43 is accommodated in the cathode tank 42, and the cathode electrode 44 is immersed therein. An electrolyte solution 46 is accommodated in the anode tank 45, and the anode electrode 47 is immersed therein. In this test, an aqueous solution obtained by mixing thiouric acid with 0.1 N sulfuric acid was used as the electrolyte solution 43, and a 1 N aqueous sodium hydroxide solution was used as the electrolyte solution 46. The galvanostat is connected to the cathode electrode 44 and the test piece 51. The potentiostat is connected to the anode electrode 47, the test piece 51, and a reference electrode 49 (for example, an Ag/AgCl electrode). The reference electrode 49 is immersed in a KCl saturated aqueous solution 48, and is connected to the anode tank 45 by a salt bridge 50.

In the testing apparatus 41, hydrogen is generated on the surface of the test piece 51 on the cathode tank 42 side by applying a predetermined potential between the test piece 51 and the cathode electrode 44 with the galvanostat to perform electrolysis. The generated hydrogen intrudes into the test piece 51 from the surface on the cathode tank 42 side. On the other hand, the surface potential of the test piece 51 is held at a potential at which hydrogen atoms are oxidized to hydrogen ions by the potentiostat. As a result, hydrogen atoms that enter from the cathode tank 42, diffuse in the test piece 51, and reach the surface on the anode tank 45 side are quickly oxidized to hydrogen ions, and an ionization current is generated. In this test, the Breakthrough time method of calculating the diffusion coefficient based on the time until the increase of the ionization current starts was adopted. Specifically, assuming that the time (Breakthrough time) from the start of the test to the start of the increase in the ionization current was tb and the thickness of the test piece 51 was L (the total thickness of the base material and the hard film), the diffusion coefficient D_{H} was obtained from Formula (1) shown below (Reference Document: Takahiro Kushida, "Research on hydrogen embrittlement by electrochemical hydrogen permeation technique", Corrosion Engineering, 2000, Vol. 49, pp. 195-200). The diffusion coefficient was measured within the range of 20°C to 25°C.
[Math. 1] ${D}_{H} = \frac{{L}^{2}}{15.3 \times tb}$

Specifically, electrolysis was performed with the area set to 3.14 cm² of the test piece 51 in contact with the electrolyte solutions 43 and 46 in the cathode tank 42 and the anode tank 45, respectively, in which the current density on the anode tank 45 side was set to 1 mA/cm², and the ionization current on the cathode side was measured in units of 0.1 µA to determine an increase in ionization current. The average value of the Breakthrough time and the average value of the diffusion coefficient D_{H} in Examples 1 to 2, Reference Examples 1 to 2, and Comparative Example 1 are shown in Table 1.

Here, in the electrochemical hydrogen permeation test, it is necessary to apply a current to the surface of the test piece and to measure the current. However, in the test piece of Example 2, the surface on the cathode tank side that generates hydrogen and from which hydrogen intrudes in is a DLC coating film, and the electrical resistance is extremely high. Thus, it was difficult to perform the electrochemical hydrogen permeation test in the same manner as described above. Thus, a gold vapor deposition film having a thickness of about several nm was formed on the DLC coating film, and an electrochemical hydrogen permeation test was performed by lowering the electric resistance value of the outermost surface. The ability of the gold deposited film to inhibit hydrogen permeation was slight in a test conducted separately.

**[Table 1]**

| | Coating film structure | Number of tests | Average value of Breakthrough time | Average value of diffusion coefficient D_{H} (× 10⁻¹¹ m²/s) |
|---|---|---|---|---|
| Comparative Example 1 | SUJ2 (quenching and tempering) | 4 | 2155 | 3.16 |
| Reference Example 1 | SUJ2 (quenching and tempering) + Ni plated coating film 5 µm | 3 | 3041 | 2.37 |
| Reference Example 2 | SUJ2 (quenching and tempering) +Ni plated coating film 30 µm | 3 | 7958 | 0.99 |
| Example 1 | Nitrogen-containing martensitic stainless steel + Ni plated coating film 5 µm | 4 | 43637 | 0.29 |
| Example 2¹⁾ | Nitrogen-containing martensitic stainless steel + Ni plated coating film 5 µm + (WC/DLC coating film + DLC coating film) 2 µm | 2 | 129480 | 0.0532 |

| | | | | |
|---|---|---|---|---|
| 1) Due to measurement in electrochemical hydrogen permeation test, a gold deposited film of about several nm is formed on the outermost surface of each test piece. | | | | |

As shown in Table 1, first, when Comparative Example 1 and Reference Examples 1 to 2 were compared with each other, in Reference Examples 1 to 2 in which a Ni plated coating film was formed, the breakthrough time was extended by 41% and 269%, respectively, with respect to Comparative Example 1 (SUJ2 having a plate thickness of 1 mm), with the thickness increased by about 0.5% and about 3%, respectively. The diffusion coefficient D_{H} calculated by the Breakthrough time method was 75% in Reference Example 1 and 31% in Reference Example 2 with respect to Comparative Example 1. From this result, it can be seen that the intrusion and diffusion of hydrogen are suppressed by the Ni plated coating film.

Next, comparing Example 1 with Reference Example 1, the breakthrough time was significantly extended, and the diffusion coefficient D_{H} was significantly reduced by using the nitrogen-containing martensitic stainless steel. From this result, it was found that the nitrogen-containing martensitic stainless steel was superior to the bearing steel in measures against hydrogen brittleness. Although martensitic stainless steel was inferior in strength to alloy steel such as bearing steel, martensitic stainless steel was excellent in corrosion resistance, and this corrosion resistance was also effective against hydrogen caused by a corrosion reaction. In addition, it is considered that the alloy component in the martensitic stainless steel, the distribution state of precipitates (carbides) in the metal structure, and the like contributed to the reduction of the diffusion coefficient.

Further, Example 2 in which the WC/DLC coating film and the DLC coating film were formed on the Ni plated coating film of Example 1 significantly extended the Breakthrough time and significantly reduced the diffusion coefficient D_{H}. The hydrogen diffusion coefficients of the WC/DLC coating film and the DLC coating film were smaller than the hydrogen diffusion coefficient of the Ni plated coating film, and were estimated to be 1.00 × 10⁻¹⁵ m²/s to 1.00 × 10⁻¹⁴ m²/s (specifically, about 1.18 × 10⁻¹⁵ m²/s). From the results of Example 2, it has been found that the WC/DLC coating film and the DLC coating film also suppress the intrusion and diffusion of hydrogen, and it has been found that the effect of the Ni plated coating film can be dramatically improved by forming these films on the Ni plated coating film.

The Breakthrough time in the present Example is an indication of the length of time for hydrogen atoms to diffuse to a position 1 mm deep from the surface of the hard film formed body.

In addition, the hydrogen diffusion coefficient of the Ni plated coating film was estimated by a finite element method using the hydrogen diffusion coefficient of 3.16 × 10⁻¹¹ m²/s and the Breakthrough time of Comparative Example 1 and the Breakthrough time of Reference Example 1 obtained by the above-described electrochemical hydrogen permeation method. As a result, the Ni plated coating film of Reference Example 1 was 4.95 × 10⁻¹³ m²/s. The method for estimating the hydrogen diffusion coefficient by the finite element method is as follows.
(1) Assuming that the concentration of one surface of a plate of 1 mm is 1, the concentration diffused to the opposite surface when the Breakthrough time elapses is analyzed using the hydrogen diffusion coefficient of Comparative Example 1 (assumed to be the lower detection limit concentration).
(2) One surface of the plate is set to have the concentration of 1,, the SUJ2 portion is set to have the hydrogen diffusion coefficient of Comparative Example 1, and the hydrogen diffusion coefficient of the coating film portion is appropriately changed as an unknown value. The analysis is repeated so that the concentration diffused to the opposite surface when the breakthrough time of Comparative Example 1 elapses becomes the concentration obtained in (1) described above.

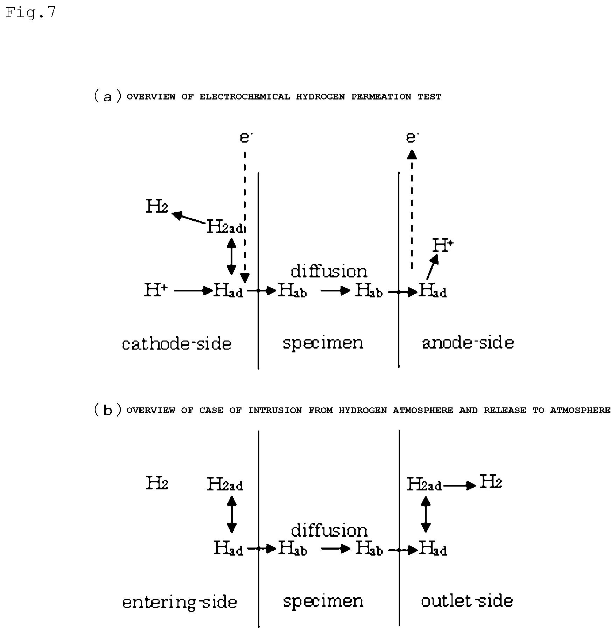

In the electrochemical hydrogen permeation test, thiourea is added to the electrolyte solution on the cathode side. As a result, as shown in FIG. 7(a), it is considered that hydrogen atoms (H_{ad}) are preferentially consumed in the intrusion reaction of H_{ad}→H_{ab} because of a mechanism such as inhibiting the H_{ad} adsorbed on the surface from recombining to become H₂. In addition, it is presumed that the reaction path after H_{2ad} is traced when there is an excess H_{ad}. On the other hand, when hydrogen is made to intrude in the test piece using hydrogen gas or a strength test such as fatigue is performed, it is also possible to delay the intrusion and diffusion of hydrogen and to prevent a decrease in strength due to hydrogen brittleness by suppressing a dissociation adsorption reaction (H₂⇔H_{2ad} or H_{2ad}⇔2H_{ad}) of hydrogen molecules (see FIG. 7(b)). However, in this case, when the supply source of hydrogen is not a hydrogen molecule but a hydrogen atom or a hydrogen ion in some molecule, there is a possibility that an effect as a measure against hydrogen brittleness is not exhibited. Thus, to be able to cope with not only hydrogen gas but also various hydrogen supply sources such as moisture in the use environment and hydrogen atoms in the lubricating oil, in the present Example, evaluation was performed with an electrochemical hydrogen permeation test focusing on intrusion and diffusion of hydrogen.

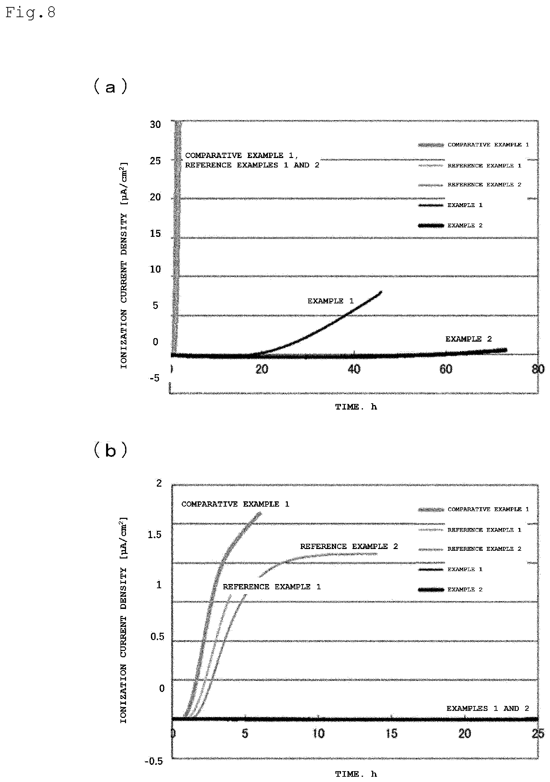

FIG. 8 is a graph summarizing the results of Examples 1 to 2, Reference Examples 1 to 2, and Comparative Example 1. As illustrated in FIG. 8, by combining the type of the base material and the Ni plated coating film as the hard film, the hydrogen brittleness delaying effect can be effectively exhibited.

In addition, because the intrusion speed of hydrogen, the duration of the intrusion, and the like vary depending on the usage and the use environment, it is considered that it is possible to adapt to more various use conditions by combining with a measure focusing on not only the diffusion speed of hydrogen atoms but also the intrusion speed.

### INDUSTRIAL APPLICABILITY

The hard film formed body of the present invention, in which hydrogen brittleness resistance and abrasion resistance are obtained, and sufficient strength is ensured, can be suitably used for machine components such as bearings used in hydrogen intrusion environments. According to the present invention, it is possible to provide a hard film that is stable in a hydrogen environment and reduces intrusion or diffusion of hydrogen on a predetermined iron-based alloy surface as a base material, and to suppress hydrogen brittleness of a machine component requiring high strength.

### REFERENCE SIGNS LIST

- 1: hard film formed body
- 2: base material
- 3: hard film
- 4: hard film formed body
- 5: base material
- 6: hard film
- 7: intermediate layer
- 8: DLC layer
- 11: deep groove ball bearing (bearing)
- 12: inner ring
- 13: outer ring
- 14: ball (rolling element)
- 15: retainer
- 16: seal member
- 17: grease
- 18: hard film
- 21: hydrogen circulation pump
- 22: motor housing
- 23: pump housing
- 24, 25: rotary shaft
- 26: motor stator
- 27: motor rotor
- 28, 29: gear
- 30, 31: rotor
- 32, 33, 34, 35, 36, 37: rolling bearing
- 41: testing apparatus
- 42: cathode tank
- 43: electrolyte solution
- 44: cathode electrode
- 45: anode tank
- 46: electrolyte solution
- 47: anode electrode
- 48: KCl saturated aqueous solution
- 49: reference electrode
- 50: salt bridge
- 51: test piece

## Claims

1. A hard film formed body comprising a hard film on a surface of a base material, the hard film suppressing intrusion and diffusion of hydrogen atoms, wherein
the base material is made of martensitic stainless steel or martensitic precipitation hardening stainless steel, the surface of the base material has a Vickers hardness of 500 Hv to 1000 Hv, and
the hard film has a Vickers hardness of 0.9 times or more a Vickers hardness of the base material and 3000 Hv or less.

2. The hard film formed body according to claim 1, wherein the base material is martensitic stainless steel, containing nitrogen, and containing 0.05 mass% or more and less than 0.60 mass% of carbon.

3. The hard film formed body according to claim 2, wherein the base material contains 0.20 mass% to 0.50 mass% of carbon, 0.10 mass% to 0.50 mass% of manganese, 0.30 mass% or less of nickel, 14.00 mass% to 17.00 mass% of chromium, 1.00 mass% to 2.50 mass% of molybdenum, and 0.10 mass% to 0.40 mass% of nitrogen.

4. The hard film formed body according to claim 1, wherein the hard film that suppresses intrusion and diffusion of hydrogen atoms is a Ni coating film.

5. The hard film formed body according to claim 4, wherein the Ni coating film includes a Ni-P-B coating film containing 90 mass% or more of Ni.

6. The hard film formed body according to claim 1, wherein a diamond-like carbon layer is formed on a surface of the hard film, and an intermediate layer is formed on a base material side of the diamond-like carbon layer.

7. The hard film formed body according to claim 1, wherein in an electrochemical hydrogen permeation method using a test piece (thickness of the base material: 1 mm) formed of the hard film formed body, when electrolysis is performed in which an area where the test piece is in contact with an electrolyte solution in each of a cathode tank and an anode tank is set to 3.14 cm², and a current density on an anode tank side is 1 mA/cm², an extension time of a Breakthrough time of the test piece is 0.4 times or more a Breakthrough time of an object piece formed of the base material having a thickness of 1 mm.

8. A machine component using the hard film formed body according to claim 1.

9. The machine component according to claim 8, serving as a bearing member.

10. A bearing using the bearing member according to claim 9.
